# EUROPÄISCHE PATENTSCHRIFT

(11) **EP 0 608 558 B1**
(45) Veröffentlichungstag und Bekanntmachung des Hinweises auf die Patenterteilung: **11.03.1998**
(21) Anmeldenummer: 93120877.1
(22) Anmeldetag: 24.12.1993
(51) Int. Cl.: B60R 19/00, B60N 2/42, B60R 21/02

(54) **Fahrgastzelle mit einer im Bereich der Sitze angeordneten Querversteifung**
Passenger enclosure with a transverse reinforcement in the area of the seats
Cellule pour les passagers avec renforcement transversal dans la zone des sièges

(30) Priorität: 29.01.1993 DE 4302505
(43) Veröffentlichungstag der Anmeldung: 03.08.1994
(73) Patentinhaber: DAIMLER-BENZ AKTIENGESELLSCHAFT, 70567 Stuttgart (DE)
(72) Erfinder: Sacco, Bruno, D-71067 Sindelfingen (DE); Tomforde, Johann, Dipl.-Ing., D-71069 Sindelfingen (DE); Reichel, Anton, Dipl.-Ing., D-71254 Ditzingen (DE)

(56) Entgegenhaltungen:
- EP-A- 0 288 386
- DE-A- 2 816 318
- DE-A- 2 856 437
- DE-A- 3 607 855
- DE-A- 3 632 877
- DE-A- 4 121 548
- US-A- 2 839 312
- US-A- 3 806 152
- US-A- 4 512 604
- PATENT ABSTRACTS OF JAPAN vol. 11, no. 368 (M-647) (2815) 2. Dezember 1987 & JP-A-62 143 746 (MAZDA MOTOR CORP.) 27. Juni 1987

## Beschreibung

Die Erfindung betrifft eine Fahrgastzelle für einen Personenkraftwagen mit energieabsorbierenden Deformationselementen im Bereich von zwei gegenüberliegenden Seitentüren und mit einer sich im wesentlichen über die Breite des Fahrzeuginnenraumes erstreckenden, längsverschiebbar angeordneten Querversteifung für wenigstens einen Sitz.

Aus der DE-OS 28 16 318 ist es bekannt, die Sitze einer Fahrgastzelle sowie den Mitteltunnel zwischen den beiden Sitzen mit Querversteifungen zu versehen. Auf Höhe dieser Querversteifungen sind in den Seitentüren Deformationselemente angeordnet, die Aufprallenergie eines kollidierenden Fahrzeuges durch Verformung absorbieren.

Aufgabe der Erfindung ist es, bei einer Fahrgastzelle der eingangs genannten Art mit einem begrenzten seitlichen Raumangebot eine ausreichende Insassensicherheit bei seitlichen Deformationen zu gewährleisten.

Diese Aufgabe wird dadurch gelöst, daß die energieabsorbierenden Deformationselemente auf Höhe der Sitzposition eines Fahrzeuginsassen angeordnet sind, daß als Querversteifung ein einzelner sich quer durch die Fahrgastzelle erstreckender Sitzquerträger vorgesehen ist, an dem der Sitz befestigt ist, und daß auf Höhe des Sitzquerträgers an den gegenüberliegenden Seitentüren jeweils ein deformationssteifer Längsträger angeordnet ist. Der Sitzquerträger nimmt seitliche Aufprallkräfte in unmittelbarer Nähe der Fahrzeuginsassen auf. Durch die längsverschiebbare Lagerung des Sitzquerträgers bleibt diese "Schutzzone" auch bei einem Verschieben des Sitzquerträgers und damit der Sitze relativ zu den Fahrzeuginsassen immer in gleicher Position. Die Anordnung zwischen den beiden Längsträgern gestattet es, seitliche Aufprallkräfte am jeweils gegenüberliegenden Längsträger aufzunehmen. Seitliche Aufprallkräfte werden daher zunächst vom ersten Längsträger, dann vom Sitzquerträger und mittels diesem vom zweiten Längsträger aufgenommen. Durch dieses Konzept ist es möglich, auch schmale und enge Fahrgastzellen ausreichend sicher zu gestalten. Durch die starre Sitzverbindung am Sitzquerträger und die Anordnung dieses Sitzquerträgers zwischen den beiden Längsträgern erfährt die Fahrgastzelle bei einem Seitenaufprall einen kürzeren Verformungsweg. Um die durch diesen kürzeren Verformungsweg auftretenden höheren Beschleunigswerte der Fahrzeuginsassen auszugleichen, sind die seitlichen Deformationselemente vorgesehen. Diese Deformationselemente bauen Energie zwischen der Seitenwand der Fahrgastzelle und den Insassen ab.

In Ausgestaltung der Erfindung ist für den wenigstens einen Sitz eine steife Schale vorgesehen. Dadurch wird ein zusätzlicher Insassenschutz erreicht.

In weiterer Ausgestaltung der Erfindung ist im Bereich der Sitzlehne des wenigstens einen Sitzes ein sich über die Länge des Sitzquerträgers erstreckendes, zum Sitzquerträger paralleles Trägerelement angeordnet. Dieses Trägerelement ist insbesondere dann vorteilhaft, wenn der Sitz selbst nicht als steife Schale ausgebildet ist.

In weiterer Ausgestaltung sind auf Höhe des Trägerelementes im Bereich der beiden Seitentüren Versteifungselemente vorgesehen. Dadurch wird im Bereich der Sitzlehne eine zweite "Schutzzone" ähnlich der durch die beiden Längsträger und den Sitzquerträger entstandenen ersten "Schutzzone" für die Insassen gebildet. Da das Trägerelement am Sitz angeordnet ist, wird diese "Schutzzone" jeweils mit der Verschiebung des Sitzes verschoben.

In weiterer Ausgestaltung der Erfindung sind auf dem Sitzquerträger wenigstens zwei Sitze versetzt zueinander angeordnet. Dadurch wird bei einem Seitenaufprall ein gegenseitiger Zusammenprall der Insassen vermieden. Diese Sitze sind ohne einen Mitteltunnel nebeneinander auf dem Sitzquerträger angeordnet, jedoch zur Achse des Sitzquerträgers versetzt.

In weiterer Ausgestaltung der Erfindung ist für den wenigstens einen Sitz ein oberhalb der Sitzposition jedes Insassen angeordneter Kopfschutz vorgesehen, der bei einer seitlichen Deformation der Fahrgastzelle zu einer Seite auf Höhe des Kopfes des Insassen beweglich ist. In einer weiteren Ausgestaltung ist der Kopfschutz im Bereich des Daches der Fahrgastzelle verschiebbar gelagert und mit wenigstens einem den Kopfschutz bei einem seitlichen Aufprall zur Seite verschiebenden Betätigungselement verbunden. Im normalen Fahrbetrieb befindet sich daher der ein energieabbauendes Deformationselement aufweisende Kopfschutz unter dem Dach der Fahrgastzelle, wo er weder Sicht- noch Bewegungsfreiheit der Fahrzeuginsassen beeinträchtigt. Lediglich bei einem seitlichen Aufprall wird der Kopfschutz zum Sichern des Kopfes des Fahrzeuginsassen seitlich zwischen Fahrgastzellenwand und Insassenkopf verschoben.

Weitere Vorteile und Merkmale der Erfindung ergeben sich aus den Unteransprüchen. In der nachfolgenden Beschreibung sind bevorzugte Ausführungsbeispiele der Erfindung beschrieben und anhand der Zeichnungen dargestellt.
- Fig. 1: zeigt schematisch eine Draufsicht auf einen Personenkraftwagen mit einer Ausführung einer erfindungsgemäßen Fahrgastzelle, in der eine zwei Sitze enthaltende Sitzbank starr mit einem Sitzquerträger verbunden ist, der zwischen zwei Türlängsträgern längsverschiebbar gelagert ist,
- Fig. 2: schematisch eine Seitenansicht des Personenkraftwagens nach Fig. 1, aus der ersichtlich ist, daß Sitzquerträger und Türlängsträger auf einer Höhe angeordnet sind,
- Fig. 3: eine schematische Draufsicht einer Ausführung ähnlich Fig. 1, bei der die Sitzlehne der Sitzbank mit einem parallel zum Sitzquerträger verlaufenden steifen Trägerelement verstärkt ist,
- Fig. 4: schematisch eine Seitenansicht des Personenkraftwagens nach Fig. 3, aus der die Anordnung zweier zusätzlicher Versteifungselemente in Form von Längsträgern in den Seitentüren auf Höhe des Trägerelementes hervorgeht, und
- Fig. 5: schematisch eine Frontansicht der Fahrgastzelle nach den Fig. 1 und 2, in der die Anordnung der seitlichen Deformationselemente im Bereich der Seitentüren und im Kopfbereich der Insassen gezeigt ist.

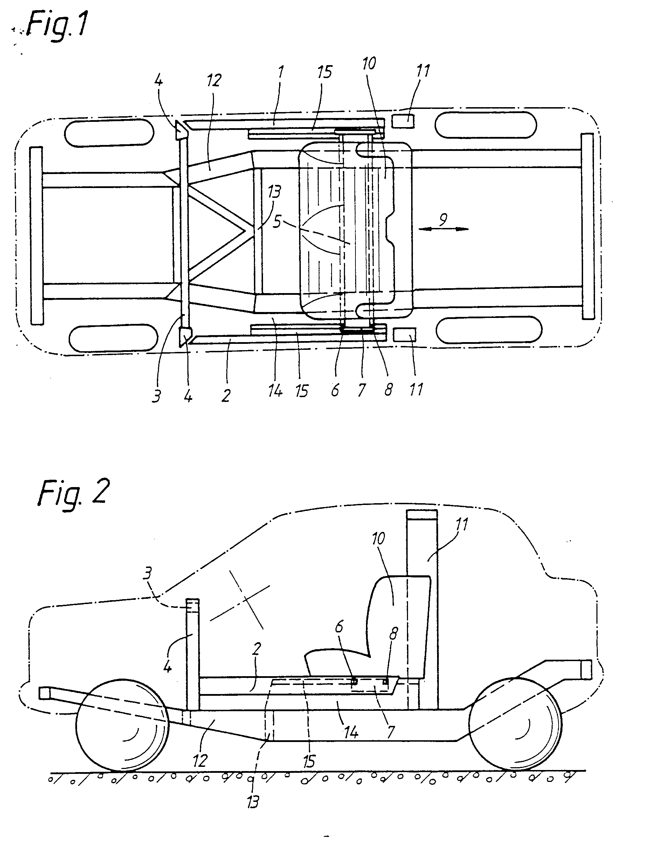

Ein Personenkraftwagen nach den Fig. 1 bis 5 weist zwei Längsträger (12) auf, die mittels mehrerer Querträger (13) miteinander verbunden sind. Im Bereich der Fahrgastzelle des Personenkraftwagens sind zudem unterhalb der beiden Seitentüren (18) zwei Längsschweller (1 und 2) vorgesehen, die zur Fahrzeugfront hin in einer A-Säule (4) münden. Auf Höhe eines nur angedeuteten Lenkrades (Fig. 2) weist die A-Säule (4) eine Querverbindung (3) auf. An jeder Seitentür (18) ist oberhalb jedes Längsschwellers ein Längsträger (1, 2) angeordnet, der aus einem kraftübertragenden Stahlprofil besteht. Der Karosserieaufbau weist zudem eine B-Säule (11) auf, die ebenfalls zur Versteifung der Tragstruktur des Personenkraftwagens beiträgt.

Zwischen diesen beiden Längsträgern (1, 2) ist ein sich durch den Innenraum der Fahrgastzelle erstreckender Sitzquerträger (5) angeordnet, mit dem eine Sitzbank (10) der Fahrgastzelle starr verbunden ist. Der Sitzquerträger (5) stellt einen steifen Rahmen dar, der aus zwei Querversteifungen bildenden Stahlprofilen (6 und 8), sowie aus zwei Abschlußplatten (7) besteht, die die Stahlprofile (6, 8) zu beiden Seiten begrenzen. Die Stahlprofile (6, 8) sind mit den beiden Abschlußplatten (7) verschweißt. Die beiden Stahlprofile (6 und 8) sind parallel und in Abstand zueinander angeordnet. Die Höhe jeder Abschlußplatte (7) entspricht in etwa der Höhe der Längsträger (1 und 2) (Fig. 2). Der Sitzquerträger (5) fluchtet in der Horizontalen mit den beiden Längsträgern (1, 2). Der Sitzquerträger (5) bildet somit einen rechteckigen Rahmen, der bezüglich seiner Breite so an den Abstand zwischen den beiden Längsträgern (1 und 2) angepaßt ist, daß jede Abschlußplatte (7) einen geringen Abstand zum jeweiligen Längsträger (1, 2) aufweist.

Dieser Abstand ist vonnöten, um eine Längsverschiebung des Sitzquerträgers (5) in Richtung des Doppelpfeiles (9) zu gewährleisten und eine Reibung der Abschlußplatten (7) an den Längsträgern (1, 2) zu vermeiden. Zur Längsverschiebung des Sitzquerträgers (5) sind anschließend an die Seitentüren (18) im Bereich des Fahrgastzellenbodens (14) Führungsschienen (15) fixiert. Diese Führungsschienen (15) erstrecken sich parallel zu den Türlängsträgern (2, 1) und weisen eine Länge auf, die etwa zwei Drittel der Länge der Türlängsträger (1, 2) entspricht. Die Führungsschienen (15) sind starr mit dem Fahrgastzellenboden (14) verbunden. In diesen Führungsschienen (15) ist der Sitzquerträger (5) mittels an sich bekannter Gleit- oder Rollelemente verschiebbar gelagert. Außerdem weist der Sitzquerträger (5) nicht dargestellte Arretierungselemente auf, mittels derer die Sitzbank (10) in der gewünschten Sitzposition in den Führungsschienen (15) arretiert werden kann. Die Sitzbank (10) ist starr mit den Stahlprofilen (6 und 8) des Sitzquerträgers (5) verbunden, beispielsweise verschweißt.

Bei einer anderen nicht dargestellten Ausführungsform der Erfindung sind auf dem Sitzquerträger zwei Sitze angeordnet, die relativ zum Sitzquerträger um einen gewissen Betrag längsverschiebbar gehalten sind. Dadurch ist jeder Sitz individuell verstellbar, dennoch kann durch die davon unabhängige Verschiebung des Sitzquertägers die "Schutzzone" für die Insassen entsprechend verlagert werden.

Bei einer weiteren nicht dargestellten Ausführung der Erfindung sind zwei Sitze relativ zum Sitzquerträger versetzt zueinander am Sitzquerträger befestigt. Die beiden Fahrzeuginsassen sitzen dadurch ebenfalls versetzt zueinander, so daß sie bei einem seitlichen Aufprall nicht zusammenprallen.

Bei einem seitlichen Aufprall werden Aufprallkräfte im Bereich der Seitentüre (18) durch den Längsschweller (14) und den Längsträger (1) aufgenommen und über die Karosserierahmenstruktur, über den Sitzquerträger (5) und die Querverbindung (3) übertragen, wobei sich der Sitzquerträger (5) am Längsträger (2) abstützt. Dadurch entsteht eine versteifte Struktur der Fahrgastzelle, die zu einer Verringerung von Deformationen der Fahrgastzelle führt.

Die Sitzbank (10) nach den Fig. 1 und 2 weist eine steife Kunststoffschale auf, durch die die gesamte Sitzbank (10) versteift ist. Dadurch wird zusätzlich zu dem durch den Sitzquerträger und die Türlängsträger (1 und 2) vorhandenen Insassenschutz ein zusätzlicher Schutz insbesondere im Bereich der Sitzlehne der Sitzbank (10) erreicht. Die steife Schale der Sitzbank (10) ist im Bereich der Rückenlehnen zu beiden Seiten jeweils nach vorne gezogen, so daß auch eine Versteifung gegen seitliche Aufprallbelastungen vorliegt.

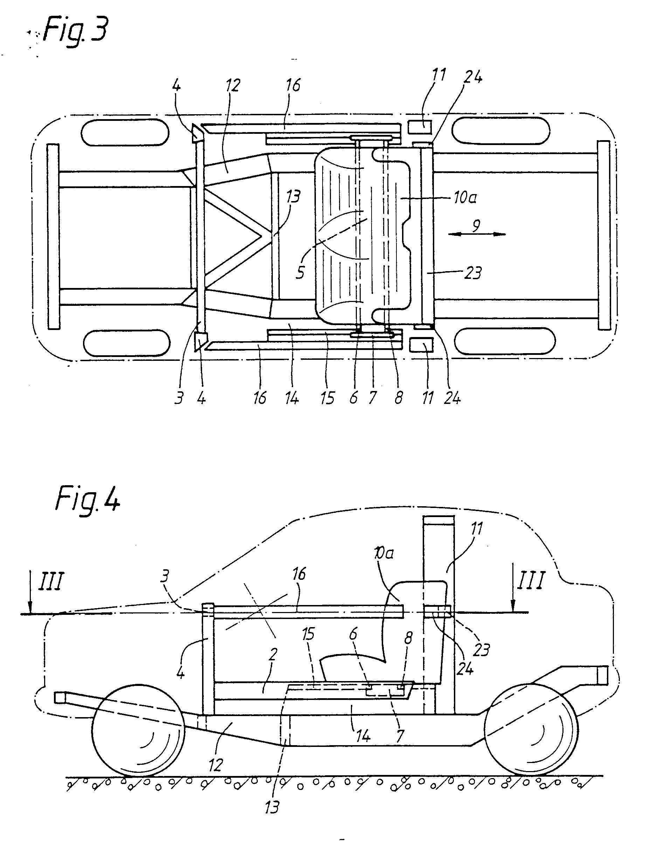

Bei der Ausführung nach den Fig. 3 und 4 ist die Sitzbank (10a) im Bereich der Rückenlehnen nicht durch eine zusätzliche steife Schale verstärkt. Anstatt dessen ist im Bereich der Rückenlehne als Versteifungselement ein Trägerelement (23, 24) vorgesehen, das parallel zum Sitzquerträger (5) starr mit der Rückenlehne verbunden ist. Das Trägerelement (23) ist rohrförmig aus einem hochfesten Material, im Ausführungsbeispiel Stahl, hergestellt und weist im Bereich seiner beiden Stirnseiten je ein flanschartiges Abstützelement (24) auf, das etwaige Seitenaufprallbelastungen auf das Trägerelement (23) überträgt. Wie aus Fig. 4 ersichtlich ist, sind in beiden Seitentüren auf Höhe des Trägerelementes (23) zwei Versteifungselemente (16) angeordnet, die ähnlich den Türlängsträgern (1, 2) aus einem steifen Material bestehen und rohrförmig sind. In den Fig. 3 und 4 ist die Sitzbank (10a) in ihre hinterste Position verschoben. In dieser Position ist das Trägerelement (23) relativ zu den Versteifungselementen (16) hinter diesen angeordnet. Die Kraftübertragung auf das Trägerelement (23) übernimmt in diesem Bereich die B-Säule (11). Funktion und Wirkungsweise des Trägerelementes (23) in Verbindung mit den Versteifungselementen (16) und der B-Säule (11) entsprechen im wesentlichen den des Sitzquerträgers (5). Das Trägerelement (23) bietet daher auch im Bereich der Rückenlehne einen zusätzlichen Versteifungsschutz.

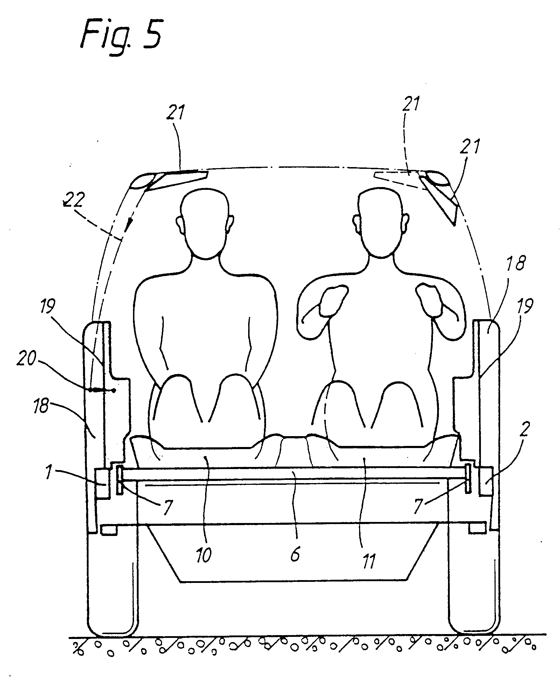

Um die durch die zuvor angeführten Versteifungen auftretenden höheren Beschleunigungswerte auf die Insassen (17) auszugleichen, sind im Bereich der beiden Seitentüren (18) verformbare Deformationselemente (19) vorgesehen, die Schaumteile darstellen. Die nachfolgend beschriebene Ausgestaltung ist anhand der Ausführungen nach den Fig. 1, 2 und 5 beschrieben, sie ist jedoch in gleicher Weise auf die Ausführungen nach den Fig. 3 und 4 übertragbar. Diese Deformationselemente (19) bauen Aufprallenergie zwischen der Außenhaut der Fahrgastzelle und den Insassen (17) ab, wodurch die Beschleunigungswerte der Insassen (17) bei einem Seitenaufprall verringert werden. Um bei einem Seitenaufprall zudem einen wirksamen Schutz für den Kopf jedes Fahrzeuginsassen (17) zu bilden, sind im Bereich des Daches der Fahrgastzelle Kopfschutzelemente (21) vorgesehen, die ebenfalls energieabbauende, verformbare Schaumteile darstellen. Für jeden Insassen (17) ist ein Kopfschutzelement (21) unter dem Dach der Fahrgastzelle angeordnet, das bei einem Seitenaufprall zur Seitentür (18) hin seitlich auf Kopfhöhe des Insassen (17) beweglich ist. Dazu ist jedes Kopfschutzelement (21) in entsprechenden Führungen verschiebbar gelagert. Zur Verschiebung des Kopfschutzelementes (21) bei einem seitlichen Aufprall ist in Fig. 5 eine mechanische Lösung dargestellt, bei der eine Zugbandanordnung (20, 22) das Kopfschutzelement (21) in seinen Führungen seitlich nach unten zieht. Dabei ist ein Zugband (22) zum einen am Deformationselement (19) der Seitentür (18) befestigt und über einen Umlenkpunkt (20) nach oben zum Kopfschutzelement (21) umgelenkt. Das andere Ende des Zugbandes (22) ist am Kopfschutzelement (21) befestigt. Bei einem seitlichen Aufprall wird mit einer Deformation des Deformationselementes (19) das Zugband (22) in die Fahrgastzelle hineingezogen, wodurch das Kopfschutzelement (21) nach unten gezogen wird.

Bei einer anderen, nicht dargestellten Ausführung der Erfindung, ist ein elektrisches Stellelement zum Verschieben des Kopfschutzelementes (21) vorgesehen, das über einen Sensor im Bereich der Seitentür ausgelöst wird. Bei einer weiteren Ausführung ist anstelle eines elektrischen Stellelementes ein pneumatisches Stellelement vorgesehen, das ebenfalls über einen entsprechenden Sensor in der Seitentür ausgelöst wird. Bei einer weiteren Ausführung der Erfindung ist als Kopfschutz ein Airbag vorgesehen, der über der Seitentür des Personenkraftwagens angeordnet ist.

## Patentansprüche

1. Fahrgastzelle für einen Personenkraftwagen mit energieabsorbierenden Deformationselementen (19, 21) im Bereich von zwei gegenüberliegenden Seitentüren (18) und mit einer sich im wesentlichen über die Breite des Fahrzeuginnenraumes erstreckenden, längsverschiebbar angeordneten Querversteifung für wenigstens einen Sitz,
**dadurch gekennzeichnet, daß**
die energieabsorbierenden Deformationselemente (19, 21) auf Höhe der Sitzposition eines Fahrzeuginsassen angeordnet sind, daß als Querversteifung ein einzelner, sich quer durch die Fahrgastzelle erstreckender Sitzquerträger (5) vorgesehen ist, an dem der Sitz (10) befestigt ist, und daß auf Höhe des Sitzquerträgers (5) an den gegenüberliegenden Seitentüren (18) jeweils ein deformationssteifer Längsträger (1, 2) angeordnet ist.

2. Fahrgastzelle nach Anspruch 1,
**dadurch gekennzeichnet,**
daß für den wenigstens einen Sitz (10) eine steife Schale vorgesehen ist.

3. Fahrgastzelle nach Anspruch 1,
**dadurch gekennzeichnet,**
daß im Bereich einer Rückenlehne des wenigstens einen Sitzes (10) ein sich über die Länge des Sitzquerträgers (5) erstreckendes, zum Sitzquerträger (5) paralleles Trägerelement (23, 24) angeordnet ist.

4. Fahrgastzelle nach Anspruch 3,
**dadurch gekennzeichnet,**
daß auf Höhe des Trägerelementes (23, 24) im Bereich der beiden Seitentüren (18) Versteifungselemente (16) vorgesehen sind.

5. Fahrgastzelle nach Anspruch 1,
**dadurch gekennzeichnet,**
daß auf dem Sitzquerträger (5) wenigstens zwei Sitze versetzt zueinander angeordnet sind.

6. Fahrgastzelle nach Anspruch 1,
**dadurch gekennzeichnet,**
daß als Deformationselement ein oberhalb der Sitzposition jedes Insassen (17) angeordneter Kopfschutz (21) vorzusehen ist, der bei einer seitlichen Deformation der Fahrgastzelle zu einer Seite auf Höhe des Kopfes des Insassen (17) beweglich ist.

7. Fahrgastzelle nach Anspruch 6,
**dadurch gekennzeichnet,**
daß der Kopfschutz (21) im Bereich des Daches der Fahrgastzelle verschiebbar gelagert und mit wenigstens einem den Kopfschutz (21) bei einem seitlichen Aufprall zur Seite verschiebenden Betätigungselement (20, 22) verbunden ist.

8. Fahrgastzelle nach Anspruch 7,
**dadurch gekennzeichnet,**
daß als Betätigungselement eine Zugbandanordnung (20, 22) vorgesehen ist, die einerseits mit den seitlichen Deformationselementen (19) und andererseits mit dem Kopfschutz (21) verbunden ist.

9. Fahrgastzelle nach Anspruch 7,
**dadurch gekennzeichnet,**
daß als Betätigungselement ein elektrisches Stellelement vorgesehen ist.

10. Fahrgastzelle nach Anspruch 7,
**dadurch gekennzeichnet,**
daß als Betätigungselement ein pneumatisches Stellelement vorgesehen ist.

## Claims

1. Passenger compartment for a passenger car, with energy-absorbing deformation elements (19, 21) in the region of two opposite side doors (18) and with a transverse stiffener, extending essentially over the width of the vehicle interior and arranged so as to be longitudinally displaceable, for at least one seat, characterized in that the energy-absorbing deformation elements (19, 21) are arranged at the level of the seat position of a vehicle occupant, in that a single seat crossmember (5) extending transversely through the passenger compartment is provided as the transverse stiffener, on which the seat (10) is fastened, and in that in each case one deformation-resistant side member (1, 2) is arranged on the opposite side doors (18) at the level of the seat crossmember (5).

2. Passenger compartment according to Claim 1, characterized in that a stiff shell is provided for the at least one seat (10).

3. Passenger compartment according to Claim 1, characterized in that a support element (23, 24) extending over the length of the seat crossmember (5) and parallel to the seat crossmember (5) is arranged in the region of a seat back of the at least one seat (10).

4. Passenger compartment according to Claim 3, characterized in that stiffening elements (16) are provided at the level of the support element (23, 24) in the region of the two side doors (18).

5. Passenger compartment according to Claim 1, characterized in that at least two seats are arranged offset relative to one another on the seat crossmember (5).

6. Passenger compartment according to Claim 1, characterized in that a head protection element (21), which is arranged above the seat position of each occupant (17) and which can be moved to one side at the level of the head of the occupant (17) in the case of a lateral deformation of the passenger compartment, is to be provided as the deformation element.

7. Passenger compartment according to Claim 6, characterized in that the head protection element (21) is displaceably supported in the region of the roof of the passenger compartment and is connected to at least one actuation element (20, 22) which displaces the head protection element (21) to the side in the case of a lateral impact.

8. Passenger compartment according to Claim 7, characterized in that a tension element arrangement (20, 22), which is connected at one end to the side deformation elements (19) and at the other end to the head protection element (21), is provided as the actuation element.

9. Passenger compartment according to Claim 7, characterized in that an electrical setting element is provided as the actuation element.

10. Passenger compartment according to Claim 7, characterized in that a pneumatic setting element is provided as the actuation element.

## Revendications

1. Cellule de l'habitacle pour un véhicule automobile, dotée d'éléments de déformation (19, 21) absorbant l'énergie, dans la zone des deux portes latérales (18) opposées, et dotée, pour au moins un siège, d'un renfort transversal disposé en étant déplaçable longitudinalement et s'étendant essentiellement sur la largeur de l'habitacle du véhicule,
caractérisée
* en ce que les éléments de déformation (19, 21) absorbant l'énergie sont disposés à la hauteur de la position assise d'un passager du véhicule,
* en ce qu'il est prévu une seule traverse (5) placée sous les sièges, s'étendant transversalement dans la cellule de l'habitacle et servant de renfort transversal, traverse sur laquelle le siège (10) est fixé, et
* en ce qu'un longeron (1, 2) rigide aux déformations, monté à la hauteur de la traverse (5) placée sous les sièges, est disposé au niveau de chacune deux portes latérales (18) opposées.

2. Cellule de l'habitacle selon la revendication 1, caractérisée en ce qu'il est prévu une coque rigide au moins pour l'un des sièges (10).

3. Cellule de l'habitacle selon la revendication 1, caractérisée en ce que, dans la zone d'un dossier d'au moins un des sièges (10), un élément support (23, 24), s'étendant sur la longueur de la traverse (5) placée sous les sièges, est disposé en étant parallèle à la traverse (5) placée sous les sièges.

4. Cellule de l'habitacle selon la revendication 3, caractérisée en ce que, à la hauteur de l'élément support (23, 24), dans la zone des deux portes latérales (18), il est prévu des éléments de renfort (16).

5. Cellule de l'habitacle selon la revendication 1, caractérisée en ce que au moins deux sièges, décalés l'un par rapport à l'autre, sont disposés sur la traverse (5) placée sous les sièges.

6. Cellule de l'habitacle selon la revendication 1, caractérisée en ce qu'il est prévu, servant d'élément de déformation, une protection (21) de la tête, disposée au-dessus de la position assise de chaque passager (17), laquelle protection de la tête, en cas de déformation latérale de la cellule de l'habitacle, est mobile d'un côté pour se placer à la hauteur de la tête du passager (17).

7. Cellule de l'habitacle selon la revendication 6, caractérisée en ce que la protection (21) de la tête est placée de façon à pouvoir coulisser dans la zone du toit de la cellule de l'habitacle et en ce que la protection (21) de la tête est connectée au moins à un élément de commande (20, 22) faisant coulisser ladite protection sur le côté en cas de choc latéral.

8. Cellule de l'habitacle selon la revendication 7, caractérisée en ce qu'il est prévu un dispositif (20, 22) à bande de traction servant d'élément de commande, lequel dispositif est relié, d'une part, aux éléments latéraux (19) de déformation et, d'autre part, à la protection (21) de la tête.

9. Cellule de l'habitacle selon la revendication 7, caractérisée en ce qu'il est prévu un élément de réglage électrique servant d'élément de commande.

10. Cellule de l'habitacle selon la revendication 7, caractérisée en ce qu'il est prévu un élément de réglage pneumatique servant d'élément de commande.
